# EUROPÄISCHE PATENTANMELDUNG

(11) **EP 4 664 183 A1**
(43) Veröffentlichungstag der Anmeldung: **17.12.2025**
(21) Anmeldenummer: 25180994.3
(22) Anmeldetag: 05.06.2025
(51) Int. Cl.: G02B 23/06, G02B 17/08

(54) **VORRICHTUNG ZUM OPTISCHEN SENDEN UND EMPFANGEN VON SIGNALEN**

(30) Priorität: 13.06.2024 DE 102024116644
(71) Anmelder: TRUMPF Laser- und Systemtechnik SE, 71254 Ditzingen (DE)
(72) Erfinder: WIMMER, Martin, 70839 Gerlingen (DE); Spiecker, Jakob, 70178 Stuttgart (DE); ZIMMERMANN, Christian, 72649 Wolfschlugen (DE)
(74) Vertreter: Trumpf Patentabteilung

(57) **Zusammenfassung**

Die vorliegende Erfindung betrifft eine Vorrichtung zum optischen Senden und Empfangen von Signalen, umfassend einen Signalgeber, der einen Signalstrahl mit dem Signal bereitstellt, einen primären Spiegel, der eine primäre Krümmung und eine Durchgangsöffnung aufweist, und einen sekundären Spiegel, der eine sekundäre Krümmung aufweist, wobei der sekundäre Spiegel dazu eingerichtet ist, den Signalstrahl durch die Durchgangsöffnung des primären Spiegels zu empfangen und den Signalstrahl in Richtung des primären Spiegels zurück zu reflektieren, wobei der sekundäre Spiegel dazu eingerichtet ist, einen Nutzteil des Signalstrahls auf den primären Spiegel zurück zu reflektieren, wobei der primäre Spiegel dazu eingerichtet ist, den Nutzteil des Signalstrahls von dem sekundären Spiegel zu empfangen und an dem sekundären Spiegel vorbei auf eine Sendestrecke zu reflektieren, wobei mindestens ein Strahlausnahmeelement vorgesehen ist, das zwischen dem primären Spiegel und dem Signalgeber angeordnet ist und dazu eingerichtet ist, einen zentralen Teil des Signalstrahls auszunehmen und somit einen Nichtnutzteil des Signalstrahls zu reduzieren.

## Beschreibung

### Technisches Gebiet

Die vorliegende Erfindung betrifft eine Vorrichtung zum optischen Senden und Empfangen von Signalen.

### Stand der Technik

Für die optische Kommunikation im Weltall werden typischerweise strahlaufweitende Teleskope auf Satelliten genutzt. Diese Teleskope können mittels eines Signalgebers Signale senden und mittels eines Signalempfängers Signale empfangen. Die Teleskope umfassen typischerweise transmissive und/oder reflexive optische Elemente, die ein optisches Signal beim Empfangen bündeln und auf den Signalempfänger leiten oder das Signal des Signalgebers beim Senden aufweiten und kollimieren. An jedem Element kann dabei eine Rückreflexion auftreten, wenn der Signalgeber einen entsprechenden Signalstrahl bereitstellt. Die Rückreflexionen können teilweise die eigenen Signalempfänger der Teleskope blenden.

Es ist bekannt, diese Rückreflexionen beispielsweise durch Antireflexcoatings zu reduzieren. Solche Antireflexbeschichtungen weisen jedoch den Nachteil auf, dass sie die Rückreflexionen nur unzureichend unterdrücken können. Insbesondere lassen sich damit nicht gezielt diejenigen Strahlanteile unterdrücken, die zu der Rückreflexion auf den Signalempfänger führen. Damit sinkt das Signal-zu-Rauschverhältnis in der optischen Kommunikation zwischen den Teleskopen.

Die CN 111 736 163 B betrifft die lasergestützte Messung der Entfernung von Zielen im Weltraum, sowie die Erfassung von Winkelkoordinaten und die Kalibrierung von Laseremissionswinkeln im Orbit.

### Darstellung der Erfindung

Ausgehend von dem bekannten Stand der Technik ist es eine Aufgabe der vorliegenden Erfindung, eine verbesserte Vorrichtung zum Senden und Empfangen von optischen Signalen bereitzustellen.

Die Aufgabe wird durch eine Vorrichtung zum optischen Senden und Empfangen von Signalen mit den Merkmalen des Anspruchs 1 gelöst. Vorteilhafte Weiterbildungen ergeben sich aus den Unteransprüchen, der Beschreibung und den Figuren.

Entsprechend wird eine Vorrichtung zum optischen Senden und Empfangen von Signalen vorgeschlagen, umfassend einen Signalgeber, der einen Signalstrahl mit dem Signal bereitstellt, einen primären Spiegel, der eine primäre Krümmung und eine Durchgangsöffnung aufweist, und einen sekundären Spiegel, der eine sekundäre Krümmung aufweist, wobei der sekundäre Spiegel dazu eingerichtet ist, den Signalstrahl durch die Durchgangsöffnung des primären Spiegels zu empfangen und in Richtung des primären Spiegels zurück zu reflektieren, wobei der sekundäre Spiegel dazu eingerichtet ist, einen Nutzteil des Signalstrahls auf den primären Spiegel zurück zu reflektieren. Der primäre Spiegel ist weiterhin dazu eingerichtet, den Nutzteil des Signalstrahls von dem sekundären Spiegel zu empfangen und an dem sekundären Spiegel vorbei auf eine Sendestrecke zu reflektieren.

Erfindungsgemäß umfasst die Vorrichtung mindestens ein Strahlausnahmeelement, das zwischen dem primären Spiegel und dem Signalgeber angeordnet ist und dazu eingerichtet ist, einen zentralen Teil des Signalstrahls auszunehmen und somit einen Nichtnutzteil des Signalstrahls zu reduzieren.

Der Signalgeber kann beispielsweise ein Laser sein, insbesondere ein Kurzpulslaser oder ein Ultrakurzpulslaser. Der Laser kann einen Laserstrahl bereitstellen, in dem die Pulse des Lasers entlang der Strahlausbreitungsrichtung propagieren. Eigenschaften des Laserstrahls oder der Pulse können beispielsweise in der Zeit oder der Frequenzdomäne variiert werden, wodurch der Laserstrahl zum Träger eines Signals wird. Beispielsweise kann der Laserstrahl in seiner Intensität oder seiner Polarisation moduliert werden. Beispielsweise kann auch die Intensität oder der zeitliche Abstand der Laserpulse moduliert werden. Der Laserstrahl ist in diesem Sinne der Signalstrahl, wobei die Modulation des Signalstrahls das kodierte Signal ist.

Der Signalgeber stellt den Signalstrahl bereit. Das Teleskop umfasst hierbei den primären Spiegel, auch Hauptspiegel des Teleskops genannt. Der primäre Spiegel hat eine Durchgangsöffnung, die vorzugsweise mittig in dem primären Spiegel angeordnet ist. Insbesondere weist der primäre Spiegel eine primäre Krümmung auf einer Seite auf. Die primäre Krümmung verleiht dem primären Spiegel eine optisch abbildende Eigenschaft. Insbesondere ist durch die Krümmung die Brennweite des primären Spiegels gegeben.

Durch die Durchgangsöffnung kann der Signalstrahl des Signalgebers in den Teleskopinnenraum treten und auf den sekundären Spiegel treffen. Der sekundäre Spiegel, oft auch Fangspiegel genannt, weist eine gekrümmte Oberfläche mit einer sekundären Krümmung auf. Analog zum primären Spiegel werden durch die sekundäre Krümmung die optisch abbildenden Eigenschaften des sekundären Spiegels definiert. Der sekundäre Spiegel weist einen Durchmesser auf, der typischerweise kleiner als der Durchmesser des primären Spiegels ist. Dadurch kommt es zu einer gewissen Abschattung des primären Spiegels, in dem Sinne, dass für das Senden und Empfangen von optischen Signalen nicht die gesamte Oberfläche des primären Spiegels mit der primären Krümmung zur Verfügung steht. Vielmehr steht nur ein Teil dieser Fläche zur Verfügung, da der Rest von dem sekundären Spiegel abgedeckt, sprich abgeschattet wird. Insbesondere kann der sekundäre Spiegel aber auch größer als die Durchgangsöffnung des primären Spiegels sein, so dass der Signalempfänger der Vorrichtung nicht durch den direkten Einfall eines empfangenen Signalstrahls geblendet wird.

Wenn der Signalstrahl durch die Durchgangsöffnung des primären Spiegels tritt und auf den sekundären Spiegel trifft, so wird der Signalstrahl durch die sekundäre Krümmung aufgeweitet und in Richtung des primären Spiegels geleitet.

Der auftreffende Signalstrahl hat dabei typischerweise einen begrenzten Durchmesser oder Strahlquerschnitt, so dass nur eine begrenzte Oberfläche des sekundären Spiegels beleuchtet wird. Je nach der lokalen sekundären Krümmung des sekundären Spiegels relativ zum Strahlmittelpunkt werden die Teilsignalstrahlen - die den Signalstrahl zusammensetzen - unterschiedlich reflektiert.

Insbesondere kann es hierbei Teilsignalstrahlen geben, die gewissermaßen senkrecht auf den sekundären Spiegel treffen. Diese Teilsignalstrahlen werden vom sekundären Spiegel antiparallel zur Strahlausbreitungsrichtung durch die Durchgangsöffnung zurück reflektiert und können daher direkt zum Signalempfänger der Vorrichtung gelangen. Es gibt jedoch auch Teilsignalstrahlen, die nicht exakt unter einem rechten Winkel auf den sekundären Spiegel fallen, jedoch trotzdem durch die Durchgangsöffnung zurück reflektiert werden und zum Signalempfänger gelangen.

Die Teilsignalstrahlen des Signalgebers, die durch die Durchgangsöffnung zurückreflektiert werden, werden Nichtnutzteil des Signalstrahls genannt, da dieser nicht für die optische Kommunikation genutzt werden kann.

Der sekundäre Spiegel kann dazu eingerichtet sein, den Nichtnutzteil des Signalstrahls in Richtung der Durchgangsöffnung des primären Spiegels zurück zu reflektieren.

Die Teilsignalstrahlen, die jedoch unter einem noch größeren Winkel auf den sekundären Spiegel treffen, werden auf die Oberfläche des primären Spiegels mit der primären Krümmung reflektiert.

Der primäre Spiegel kann diese Teilsignalstrahlen an dem sekundären Spiegel vorbei auf einen Signalweg reflektiert, der beispielsweise zwei Satelliten miteinander verbindet.

Die Teilsignalstrahlen des Signalgebers, die auf den Signalweg reflektiert werden können, werden Nutzteil des Signalstrahls genannt, da diese für die optische Kommunikation genutzt werden können.

Gewissermaßen ist durch die Ausrichtung des Signalgebers und die optische Justage und insbesondere die Kollimation des Signalstrahls, sowie die sekundäre Krümmung bereits vorgegeben, welche Teile des Signalstrahls unmittelbar nach dem Aussenden aus dem Signalgeber dem Nutzteil und dem Nichtnutzteil zugeordnet werden.

Jedoch können auch die weiteren optischen Komponenten des Teleskops einen Teil des Signalstrahls zurück zum Signalempfänger reflektieren. Beispielsweise weist jede Linse im Strahlengang eine gewisse Reflektivität auf, die beispielsweise durch den Brechungsindex bestimmt ist.

In diesem Sinne ist es besonders vorteilhaft den Nichtnutzteil so früh wie möglich aus dem optischen Pfad zu isolieren, so dass eine Rückreflexion zum Signalempfänger wirksam unterdrückt wird.

Hierzu umfasst die vorgeschlagene Vorrichtung mindestens ein Strahlausnahmeelement, das zwischen dem sekundären Spiegel und dem Signalgeber angeordnet ist und dazu eingerichtet ist, einen zentralen Teil des Signalstrahls auszunehmen und somit den Nichtnutzteil des Signalstrahls zu reduzieren.

Indem der zentrale Teil des Signalstrahls ausgenommen wird, kann eine Rückreflexion des Nichtnutzteils in Richtung Signalempfänger beziehungsweise durch die Durchgangsöffnung vermieden werden. Dies verhindert, dass der Signalempfänger der Vorrichtung, der ebenfalls hinter der Durchgangsöffnung angeordnet ist, von der Rückreflexion getroffen wird und dadurch ein Störsignal detektiert. Insbesondere kann somit das Signal-zu-Rauschverhältnis der Kommunikation verbessert werden, da die Störsignale in Form des Nichtnutzteils auf dem Signalempfänger vermieden werden. Somit können auch die Anforderungen an andere Komponenten der Vorrichtung reduziert werden was die Signalstärke betrifft, so dass die Wirtschaftlichkeit der Vorrichtung erhöht und die Produktion der Vorrichtung vereinfacht wird.

Das Strahlausnahmeelement wird bevorzugt möglichst früh im Strahlengang, beispielsweise in Strahlausbreitungsrichtung unmittelbar hinter dem Signalgeber, angeordnet.

Dadurch können die Teilsignalstrahlen des Nichtnutzteils bereits ausgenommen werden, ohne dass es zu einer Rückreflexion kommt. Dadurch kann insbesondere auch vermieden werden, dass die Rückreflexion an jedem optischen Element im Strahlengang berücksichtigt werden muss. Dies führt insgesamt zu einer geringeren Rückreflexion, so dass die Gesamtsystemperformance verbessert wird.

In einer weiteren Ausführungsform kann die Vorrichtung ein Linsensystem aufweisen, das dazu eingerichtet ist, den Signalstrahl zu formen, bevor dieser auf den sekundären Spiegel fällt, wobei das Linsensystem mindestens ein Strahlausnahmeelement umfasst.

Das Linsensystem kann beispielsweise eine oder mehrere Linsengruppen bereitstellen und den Signalstrahl kollimieren oder einen bestimmten Öffnungswinkel aufprägen, so dass der Nutzteil des Signalstrahls nach der Reflexion am primären Spiegel kollimiert ist. An jeder Linse des Linsensystems können Rückreflexionen auftreten, die den Signalempfänger blenden. Durch ein Strahlaufnahmeelement können diese Rückreflexionen unterdrückt werden.

Das Strahlausnahmeelement kann hierbei auf dem Linsensystem geformt oder angeordnet sein.

In einer weiteren Ausführungsform kann die Vorrichtung einen Umlenkspiegel aufweisen, der dazu eingerichtet ist, den Signalstrahl umzulenken, bevor dieser auf den sekundären Spiegel fällt, wobei der Umlenkspiegel mindestens ein Strahlausnahmeelement umfasst.

Solche Umlenkspiegel werden typischerweise eingesetzt, um den Signalstrahl vom Signalgeber auf den optischen Weg durch die Vorrichtung zu lenken. Beispielsweise kann ein Umlenkspiegel den Signalstrahl um 30° oder 45° oder 90° ablenken.

Das Strahlausnahmeelement kann hierbei auf dem Umlenkspiegel geformt oder angeordnet sein.

In einer weiteren Ausführungsform kann der sekundäre Spiegel der Vorrichtung mindestens ein Strahlausnahmeelement umfassen.

Das Strahlausnahmeelement kann allgemein eine räumlich begrenzte optische Strukturierung sein, so dass eine Rückreflexion des Nichtnutzteils unterdrückt wird.

Das Strahlausnahmeelement kann eine Schwärzung sein.

Dadurch kann der Nichtnutzteil des Signalstrahls geblockt werden und somit eine Rückreflexion vermieden werden. Insbesondere kann es genügen, lediglich die Transmission mittels der Schwärzung zu reduzieren. Bevorzugt übersteigt hierbei die Absorption oder die diffuse Streuung der Schwärzung die Reflexion. Dementsprechend wird durch die Schwärzung weniger Signalleistung reflektiert, als durch eine Anti-Reflex Schicht des optischen Elements.

Beispielsweise kann eine oder mehrere Linsen des Linsensystems geschwärzt sein.

Das Strahlausnahmeelement kann eine Blende sein.

Dadurch kann der Nichtnutzteil des Signalstrahls geblockt werden. Da die Blende typischerweise zusätzlich zu den optischen Komponenten in den Strahlengang eingebracht wird, kann dadurch eine höhere Signalleistung ermöglicht werden, da der Nichtnutzteil nicht von einer optischen Komponente des Teleskops absorbiert wird.

Die externe Befestigung der Blende kann beispielsweise entlang weiterer abschattender Bauteile in der Vorrichtung angeordnet sein, wie beispielsweise einer Fangspiegelspinne des sekundären Spiegels.

Die Blende kann einen Durchmesser zwischen 0,5 mm und 3 mm aufweisen, in Abhängigkeit davon, wo die Blende im Strahlengang angeordnet wird.

Beispielsweise kann die Blende unmittelbar in Strahlausbreitungsrichtung hinter dem Signalgeber angeordnet sein.

Das Strahlausnahmeelement kann auch eine Mattierung sein.

Dadurch kann eine ungerichtete Rückstreuung des Nichtnutzteiles erfolgen, so dass dieser Nichtnutzteil nicht zum Signalempfänger gelangt. Vorteilhafterweise kann diese Ausführungsform mit einer Strahlfalle kombiniert werden.

Beispielsweise kann der sekundäre Spiegel mattiert sein. Dadurch wird das Licht des Nichtnutzteils in dem Teleskoptubus gestreut, jedoch kann durch die räumlich begrenzte Durchgangsöffnung vermieden werden, dass das gestreute Licht zum Signalempfänger gelangt.

Das Strahlausnahmeelement kann eine Bohrung oder eine Senkung sein.

Dadurch wird die optische Fläche eines optischen Elements des Teleskops beispielsweise der lokal inaktiviert, so dass eine Rückreflexion vermieden wird.

Beispielsweise kann der Umlenkspiegel durchbohrt werden. Je näher die Abschattung an dem Signalgeber angeordnet ist, desto geringer ist die Rückstreuung im System. Der Durchmesser der Bohrung des Umlenkspiegels beträgt zwischen 0,5 mm und 5 mm und hängt insbesondere vom Quotienten des Durchmessers des Sekundärspiegels und der Vergrößerung der Vorrichtung ab.

Beispielsweise kann auch der Sekundärspiegel durchbohrt oder angebohrt werden. Der Durchmesser einer solchen Bohrung kann zwischen 0,2 mm und 5 mm betragen.

Das Strahlausnahmeelement kann ein reflektives Element sein und insbesondere einen reflektiven Konus umfassen, so dass der Nichtnutzteil des Signalstrahls aus dem Signalstrahl herausreflektiert wird.

Ein reflektives Element reflektiert den Signalstrahl im Gegensatz zu einer Mattierung. Das reflektive Element kann den Nichtnutzteil des Signalstrahls gezielt aus dem Signalstrahl herausreflektieren und beispielsweise zu einer Strahlfalle leiten.

Es ist aber auch möglich, dass das reflektive Element eine Konusform aufweist, wobei die Spitze des Konus entgegen der Strahlausbreitungsrichtung zeigt. Durch den Durchmesser der Grundfläche des Konus kann der Nichtnutzteil des Signalstrahls bestimmt werden. Durch den Konuswinkel kann bestimmt werden, unter welchem Winkel der Nichtnutzteil des Signalstrahls abgelenkt werden soll.

Analog ist es möglich, dass das reflektive Element eine Kugelform aufweist oder als Kugelsegment ausgestaltet ist. Mit anderen Worten ist der Querschnitt des reflektiven Elements mindestens abschnittsweise rund.

Der Durchmesser des Strahlausnahmeelements kann im Allgemeinen - also für alle Ausführungsformen - zwischen 0,2 mm und 5 mm, insbesondere zwischen 0,5 mm und 3 mm betragen.

Das Strahlausnahmeelement kann ein Strahlformungselement sein.

Ein Strahlformungselement kann beispielsweise eine Axikon oder ein diffraktives optisches Element sein oder eine Freiformfläche sein. Mit dem Strahlformungselement kann dem Signalstrahl ein bestimmtes Strahlprofil aufgeprägt werden, bei dem auf der Strahlachse keine oder nur geringfügig viel Energie transportiert wird. Beispielsweise kann der Signalstrahl ein ringförmiges Profil aufweisen. Gewissermaßen wird durch die Strahlformung der Nichtnutzteil des Signalstrahls ausgespart.

Es ist aber auch möglich, dass der Signalstrahl ein hantelförmiges Profil aufweist, oder ein kleeblattförmiges Profil aufweist oder ein Profil aus konzentrischen Ringen aufweist. In jedem Fall kann damit auf der Strahlachse der Energietransport minimiert oder ausgeschaltet werden, so dass der Nichtnutzteil des Signalstrahls reduziert oder ausgeschaltet wird.

Strahlformungselemente weisen den Vorteil auf, dass der Nichtnutzteil des Signalstrahls reduziert werden kann, in dem gewissermaßen die Energie in den Nutzteil des Signalstrahls übertragen wird. Dadurch kann also nicht nur das Signal-Rausch-verhältnis verbessert werden in dem der Nichtnutzteil reduziert wird, sondern gleichzeitig wird auch die Signalstärke des Nutzteils des Signalstrahls erhöht.

Die Signalstärke des Nutzteils des Signalstrahls wird durch das Strahlausnahmeelement nicht reduziert.

Das Strahlausnahmeelement kann den Signalstrahl nur insofern ausnehmen, als es durch die Aufteilung in Nutzteil und Nichtnutzteil durch die Reflexion am sekundären Spiegel und dem Durchmesser der Durchgangsöffnung des primären Spiegels sowieso der Fall wäre.

Mit anderen Worten kann mit dem Strahlausnahmeelement vermieden werden, dass Strahlteile ausgenommen werden, die zum Nutzteil gehören. Dadurch bleibt die Signalstärke der Vorrichtung unbeeinflusst. Zudem bleiben auch die weiteren Spezifikationen des Nutzteils des Signalstrahls unbeeinflusst.

Durch das Strahlausnahmeelement wird dadurch lediglich eine Unterdrückung der Rückreflexion des Nichtnutzteils zum Signalempfänger bewirkt. Durch das Strahlausnahmeelement kann die gesamte empfangene Signalstärke der Rückreflexion weniger als 20%, bevorzugt weniger als 10%, besonders bevorzugt weniger als 5% betragen, verglichen mit der empfangenen Signalstärke der Rückreflexion ohne Strahlausnahmeelement.

Bezogen auf einzelne Winkelbereiche der Rückreflexion zur optischen Achse kann die Unterdrückung jedoch auch stärker sein. Beispielsweise kann die empfangene Signalstärke der Rückreflexion weniger als 1% betragen, bevorzugt weniger als 0,1% betragen, bezogen auf einen Winkelbereich von ±1°, verglichen mit der empfangenen Signalstärke der Rückreflexion ohne Strahlausnahmeelement.

Der primäre Spiegel und der sekundäre Spiegel können einen Cassegrain-Teleskop bilden.

Ein Cassegrain-Teleskop ist ein Spiegelteleskop. Hierbei werden beim Empfangen von optischen Signalen die vom primären Spiegel durch die primäre Krümmung gebündelten Strahlen über den sekundären Spiegel durch die Durchgangsöffnung im primären Spiegel zum Signalempfänger gelenkt. Entsprechend umgekehrt verläuft der Signalstrahl wenn ein Signal gesendet werden soll.

Der primäre Spiegel ist hierbei ein konkav-parabolischer Hauptspiegel und reflektiert das Signal zu einem konvex-hyperbolischen sekundären Spiegel. Der sekundäre Spiegel ist so angeordnet, dass sein auf seiner konkaven Seite liegender virtueller Brennpunkt mit dem des großen Parabolspiegels übereinstimmt. Sein auf seiner konvexen Seite liegender Brennpunkt zeigt in Richtung des primären Spiegels.

Cassegrain-Teleskope weisen bei einer kompakten Bauform eine besonders große Brennweite auf.

Die Spiegel der Vorrichtung können Metallspiegel sein.

Sowohl der primäre Spiegel und der sekundäre Spiegel als auch ein Umlenkspiegel können dementsprechend aus Metall hergestellt werden.

Beispielsweise können die primären und sekundären Krümmungen durch Drehen der Spiegel mittels einer Drehbank oder Fräse hergestellt. Dadurch können auch besonders einfach Bohrungen und Senkungen erzeugt werden.

Eine weitere Möglichkeit zur Herstellung der primären und sekundären Krümmungen ist das chemische Abscheiden.

Für die optische Kommunikation genügt die optische Qualität von Metallspiegeln, die durch Drehen und Schleifen günstig hergestellt werden können. Zudem können Metallspiegel für bestimmte Wellenlängen des Signalgebers eine hohe Reflektivität aufweisen.

### Kurze Beschreibung der Figuren

Bevorzugte weitere Ausführungsformen der Erfindung werden durch die nachfolgende Beschreibung der Figuren näher erläutert. Dabei zeigen:
- Figur 1: eine Vorrichtung nach dem Stand der Technik;
- Figur 2: den Strahlengang des Nichtnutzteils nach dem Stand der Technik;
- Figur 3: den Strahlengang des Nutzteils nach dem Stand der Technik;
- Figur 4: eine erfindungsgemäße Vorrichtung mit einer Bohrung im sekundären Spiegel als Strahlausnahmeelement;
- Figuren 5A, B, C: eine erfindungsgemäße Vorrichtung mit einem konischen Strahlausnahmeelement auf dem Sekundärspiegel;
- Figur 6: eine schematische Darstellung der Rückreflexion am Linsensystem nach dem Stand der Technik;
- Figur 7: eine erfindungsgemäße Vorrichtung mit unterdrückter Rückreflexion durch eine Bohrung in einem Umlenkspiegel als Strahlausnahmeelement; und
- Figur 8: eine erfindungsgemäße Vorrichtung mit unterdrückter Rückstreuung durch eine Blende im Strahlengang.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanzen zu vermeiden.

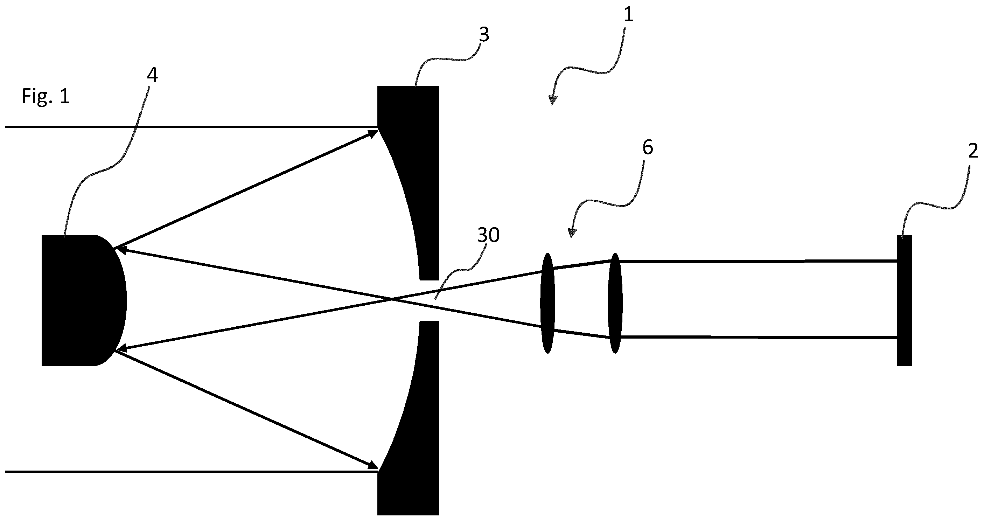

Figur 1 zeigt schematisch eine Vorrichtung 1 nach dem Stand der Technik.

Die Vorrichtung 1 umfasst einen Signalgeber 2, der einen Signalstrahl 20 bereitstellt. Der Signalstrahl 20 kann das zu sendende Signal tragen. Die Vorrichtung umfasst typischerweise auch einen Signalempfänger, der dazu eingerichtet ist ein Signal zu empfangen (nicht gezeigt).

Der Signalstrahl 20 des Signalgeber 2 ist bevorzugt kollimiert und wird zunächst durch ein optionales Linsensystem 6 geleitet, mit dem die Phasenfront des Signalstrahls 20 modifiziert wird.

Nach dem Durchlaufen des Linsensystems 6 durchläuft der Signalstrahl 20 eine Durchgangsöffnung 30 eines primären Spiegels 3. Der primäre Spiegel 3 weist hierbei insbesondere eine primäre Krümmung auf. Nach dem Durchlaufen der Durchlassöffnung 30 fällt der Signalstrahl 20 auf den sekundären Spiegel 4 mit der sekundären Krümmung. Der Signalstrahl 20 wird von dort aus zurück in Richtung des primären Spiegels 3 reflektiert.

Bei der Rückreflexion in Richtung des primären Spiegels werden Teilsignalstrahlen zurück durch die Durchgangsöffnung 30 geleitet. Diese Teilsignalstrahlen werden Nichtnutzteile des Signalstrahls 20 genannt, da sie nicht für die Signalübertragung verwendet werden können. Die anderen Teilsignalstrahlen treffen jedoch auf die primäre Krümmung des primären Spiegels 30, werden dadurch beispielsweise kollimiert und aus dem Spiegelsystem heraus auf den Signalweg reflektiert. Diese Teile werden Nutzteile des Signalstrahls 20 genannt.

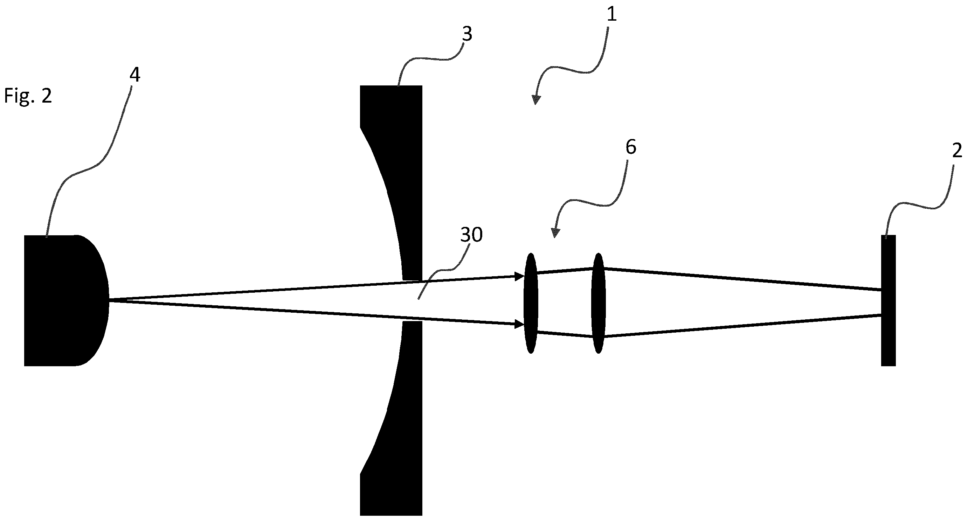

Figur 2 zeigt eine detaillierte Darstellung der Rückreflexion des Nichtnutzteils der Teilsignalstrahlen 20 am sekundären Spiegel. Der Nichtnutzteil tritt durch die Durchgangsöffnung 30 hindurch und anschließend wieder durch das Linsensystem 6. Dabei ist die Rückreflexion nicht kollimiert, sondern propagiert unter einem gewissen Öffnungswinkel in Richtung des Signalgebers 2, beziehungsweise des Signalempfängers (nicht gezeigt).

Welche Teile des Signalstrahls zum Nichtnutzteil des Signalstrahls 20 gehören ist durch die optische Konfiguration bereits beim Austritt aus dem Signalgeber 2 festgelegt und kann durch die zentrumsnahen Teilstrahlen identifiziert werden. Folglich können die zum Zentrum des Signalstrahls 20 beabstandeten Teilsignalstrahlen als Nutzteil des Signalstrahls 20 identifiziert werden.

Da lediglich die achsnahen Strahlen durch die Durchgangsöffnung 30 zurückreflektiert werden, können auch nur diese Teile das Signal-zu-Rauschverhältnis eines Signalempfängers verschlechtern. Wenn der Empfänger beispielsweise gleichzeitig ein Signal von einem anderen Satelliten empfängt und die Rückreflexion empfängt, dann können beide Signale nicht voneinander getrennt werden. Demzufolge muss eine Rückreflexion beim Senden von Signalen unterdrückt werden.

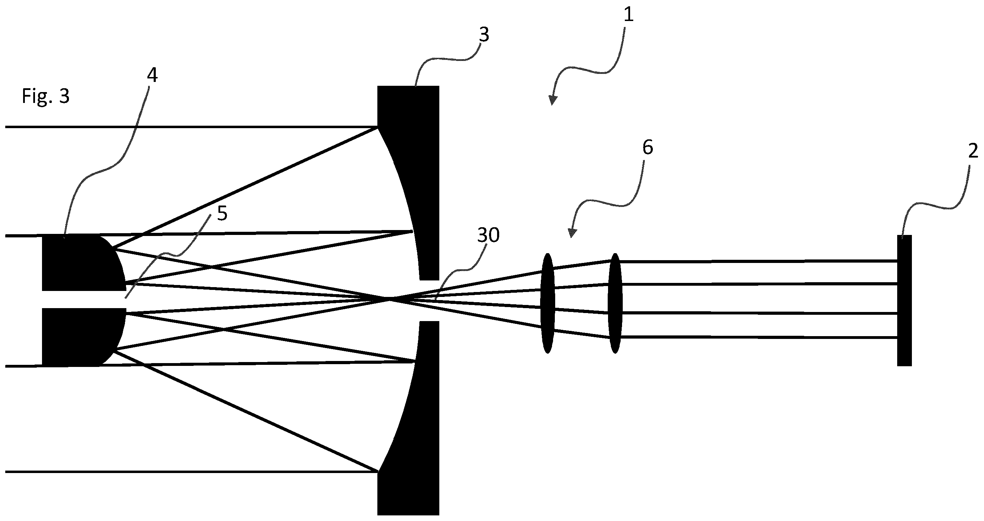

Figur 3 zeigt eine detaillierte Darstellung der Propagation des Nutzteils des Signalstrahls 20 durch die Vorrichtung 1. Der Nutzteil des Signalstrahls 20 besteht insbesondere aus Teilsignalstrahlen die von der optischen Achse beabstandet sind. Der Nutzteil des Signalstrahls 20 wird insgesamt von dem sekundären Spiegel 4 auf den primären Spiegel 3 reflektiert und vom primären Spiegel 3 aus der Vorrichtung 1 auf den Signalweg reflektiert.

Ausgehend von einem Vergleich der Figuren 2 und 3 besteht die Erfindung im Wesentlichen darin, in dem Signalstrahl 20 lediglich diejenigen Teilsignalstrahlen herauszunehmen, die zu einer Rückreflexion zum Signalempfänger führen. Dadurch kann insbesondere das Signal-zu-Rauschverhältnis am Signalempfänger in der Vorrichtung 1 verbessert werden, da keine Störsignale von dem Nichtnutzteil des Signalstrahls 20 detektiert werden.

Eine solche Reduktion der Rückreflexion wird durch ein Strahlausnahmeelement 5 erreicht, das im Strahlengang zwischen dem Signalgeber 2 und dem sekundären Spiegel 4 angeordnet wird. Hierdurch können insbesondere die Spezifikationen und die Signalstärke des Nutzteils des Signalstrahls 20 beibehalten werden, da ohnehin nur diejenigen Teile aus dem Signalstrahl reduziert werden, die nicht zur Signalübertragung beitragen können.

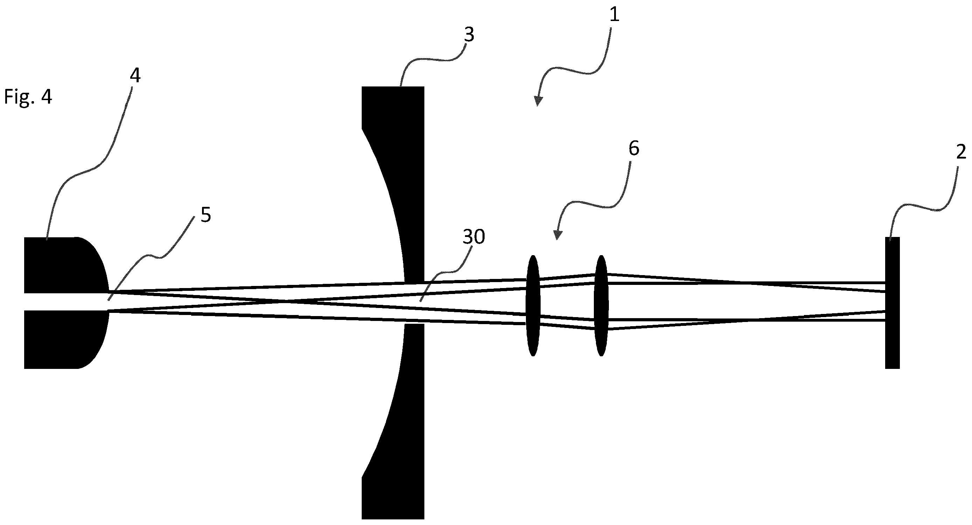

Figur 4 zeigt eine Ausführungsform der erfindungsgemäßen Vorrichtung 1. Der Strahlengang ist lediglich für den Nichtnutzteil des Signalstrahls 20 dargestellt. Hierbei weist der sekundäre Spiegel 4 ein Strahlausnahmeelement 5 in Form einer Bohrung auf. Der Durchmesser der Bohrung kann beispielsweise zwischen 0,2 mm und 5mm betragen. Durch die Bohrung 5 fällt der Nichtnutzteil nicht auf den sekundären Spiegel 4 und wird nicht oder nur stark abgeschwächt in Richtung des primären Spiegels 3 reflektiert. Eine Rückreflexion zum Signalempfänger kann dadurch effektiv unterdrückt werden.

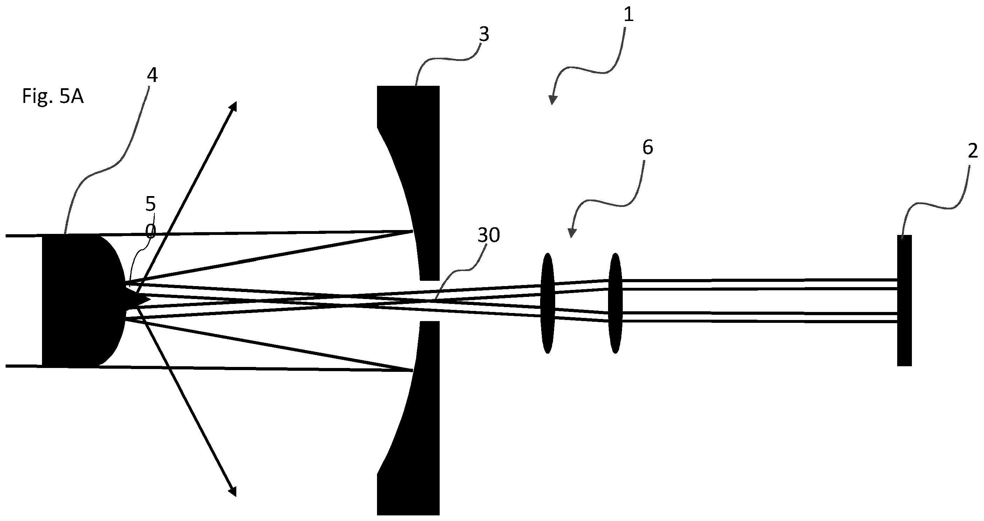

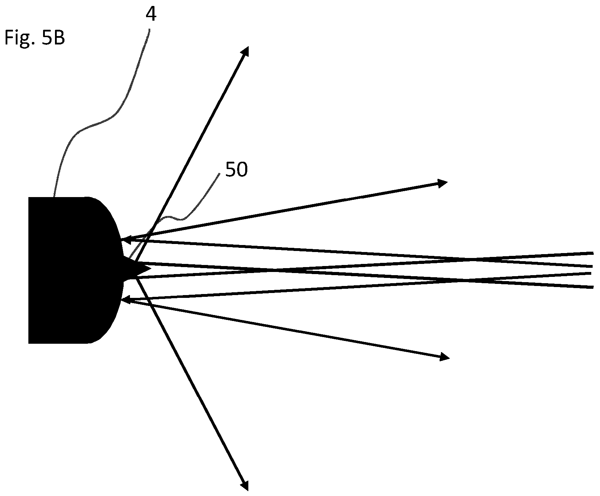

Figur 5A, B zeigen weitere möglich Ausführungsformen eines Strahlausnahmeelements 5 am sekundären Spiegel 4. Hierbei weist der sekundäre Spiegel 4 ein reflektives Element als Strahlausnahmeelement auf, insbesondere ein konisches Element 50. Durch das konische Element können die achsnahen Strahlen unter einem stark divergierenden Winkel wegreflektiert werden und beispielsweise in die Tubuswand des Teleskops (nicht gezeigt) oder eine Strahlfalle geleitet werden. Durch den Durchmesser der Basis des Konus 50 kann die Menge an ungenutzten Teilsignalstrahlen bestimmt werden, während der Öffnungswinkel des Konus 50 bestimmt, unter welchem Winkel die Teilsignalstrahlen reflektiert werden. Eine Rückreflexion zum Signalempfänger kann dadurch effektiv unterdrückt werden.

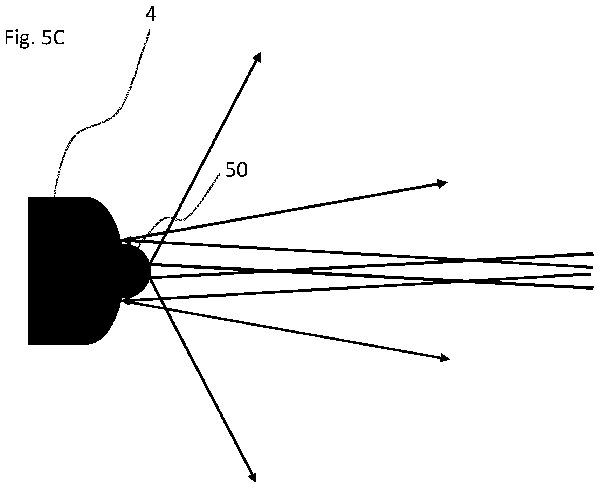

Figur 5C zeigt eine zur Figur 5B analoge Ausführungsform eines Strahlausnahmeelements 5 am sekundären Spiegel 4. Hierbei ist das reflektive Element im Querschnitt mindestens abschnittsweise rund beziehungsweise umfasst ein Kugelsegment.

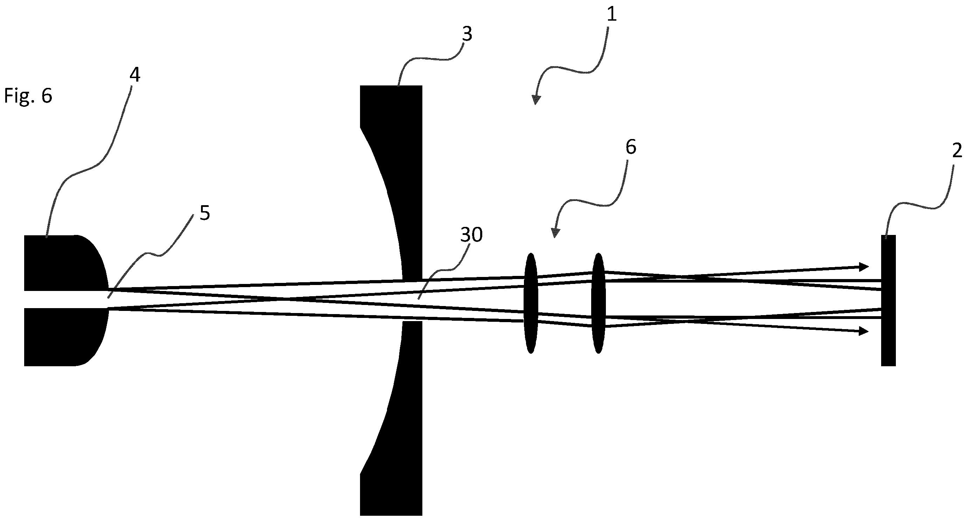

Figur 6 zeigt, dass eine Rückreflexion jedoch nicht nur am sekundären Spiegel 4 auftreten kann. Vielmehr kann prinzipiell jedes optische Element im Strahlengang der Vorrichtung 1 einen Teil des Signalstrahls 20 zurückreflektieren. Vorliegend ist die Rückreflexion am Linsensystem 6 gezeigt. Die in Strahlausbreitungsrichtung erste Linse des Linsensystems 6 reflektiert den Nichtnutzteil des Signalstrahls 20 teilweise zurück. Eine solche Rückreflexion kann beispielsweise durch eine lokale Schwärzung der Linse oder eine Mattierung unterdrückt werden. Eine Rückreflexion zum Signalempfänger kann dadurch effektiv unterdrückt werden.

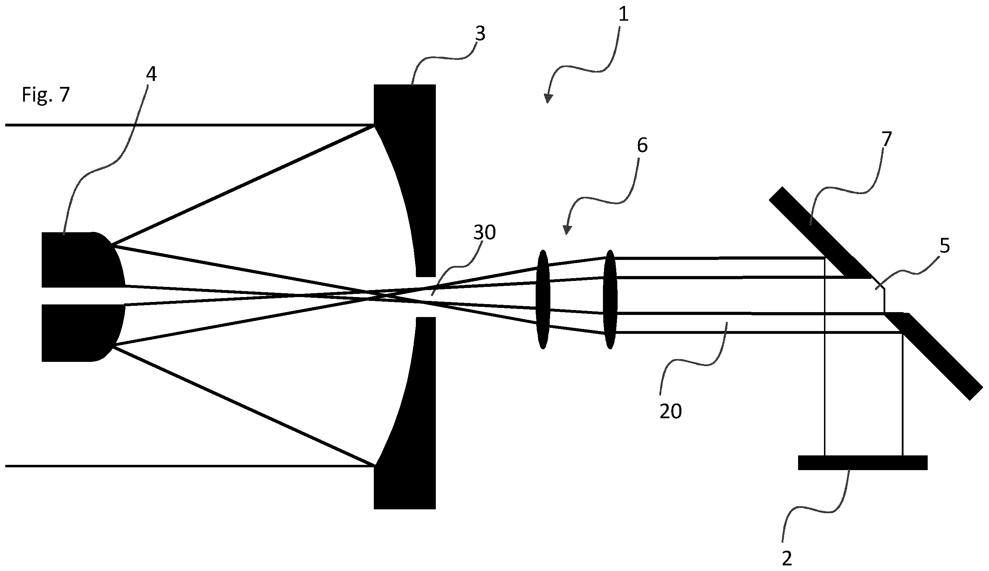

Figur 7 zeigt eine weitere Ausführungsform der erfindungsgemäßen Vorrichtung 1. Hierbei liegt der Gedanke zugrunde, dass es besonders vorteilhaft ist, wenn diejenigen Teilsignalstrahlen, die zu einer Rückreflexion führen, direkt nach dem Signalgeber 2 aus dem Signalstrahl 20 genommen werden.

Aus diesem Grund ist hinter den Signalgeber 2 ein Umlenkspiegel 7 angeordnet, der den Signalstrahl 20 auf die optische Achse des Teleskops reflektiert. Hierbei ist der Umlenkspiegel 70 unter einem Winkel von 45° zum Signalstrahl 20 angeordnet, so dass der Signalstrahl 20 um 90° umgelenkt wird. Der Umlenkspiegel 7 weist ein Strahlausnahmeelement 5 in Form einer Bohrung auf. Der Durchmesser der Bohrung des Umlenkspiegels 7 beträgt beispielsweise zwischen 0,5 mm und 5 mm. Durch die Bohrung werden die Nichtnutzteile des Signalstrahls 20 nicht auf die optische Achse gelenkt. Vielmehr können diese an anderer Stelle in eine Strahlfalle geleitet werden (nicht gezeigt). Eine Rückreflexion zum Signalempfänger kann dadurch effektiv unterdrückt werden.

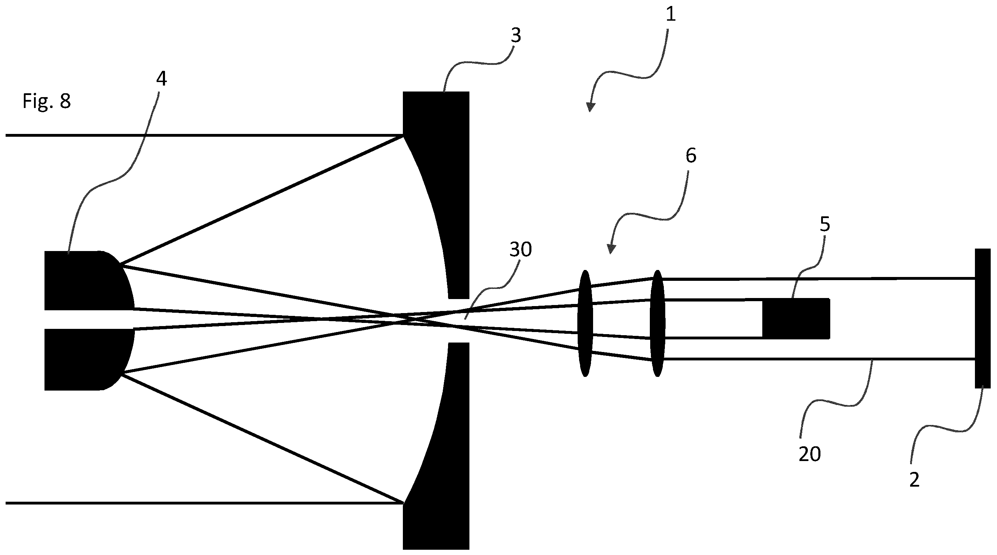

Figur 8 zeigt eine Ausführungsform der erfindungsgemäßen Vorrichtung 1. Hierbei wird der Nichtnutzteil des Signalstrahls 20 mittels einer Blende als Strahlausnahmeelement 5 aus dem Signalstrahl 20 zu entfernt. Die Blende wird im Zentrum des kollimierten Signalstrahls 20 angeordnet, wodurch die entsprechenden Nichtnutzteile geblockt werden können. Die Blende kann beispielsweise einen Durchmesser zwischen 0,5 mm und 3 mm aufweisen. Die Blende ist als externes Bauteil besonders geeignet, um hohe Signalleistungen aufzunehmen.

Die in den Figuren gezeigten Vorrichtungen basieren auf Cassegrain-Teleskopen, die eine besonders große Brennweite bei kompakter Bauform aufweisen. Die Spiegel der Vorrichtung 1 können insbesondere Metallspiegel sein, die besonders einfach und kostengünstig herzustellen sind.

Soweit anwendbar, können alle einzelnen Merkmale, die in den Ausführungsbeispielen dargestellt sind, miteinander kombiniert und/oder ausgetauscht werden, ohne den Bereich der Erfindung zu verlassen.

### Bezugszeichenliste

- 1: Vorrichtung
- 2: Signalgeber
- 20: Signalstrahl
- 3: primärer Spiegel
- 30: Durchgangsöffnung
- 4: sekundärer Spiegel
- 5: Strahlausnahmeelement
- 50: Konus
- 6: Linsensystem
- 7: Umlenkspiegel

## Patentansprüche

1. Vorrichtung (1) zum optischen Senden und Empfangen von Signalen, umfassend einen Signalgeber (2), der einen Signalstrahl (20) mit dem Signal bereitstellt,
einen primären Spiegel (3), der eine primäre Krümmung und eine Durchgangsöffnung (30) aufweist, und
einen sekundären Spiegel (4), der eine sekundäre Krümmung aufweist,
wobei der sekundäre Spiegel (4) dazu eingerichtet ist, den Signalstrahl (20) durch die Durchgangsöffnung (30) des primären Spiegels (3) zu empfangen und den Signalstrahl (20) in Richtung des primären Spiegels (3) zurück zu reflektieren,
wobei der sekundäre Spiegel (4) dazu eingerichtet ist, einen Nutzteil des Signalstrahls (20) auf den primären Spiegel (3) zurück zu reflektieren,
wobei der primäre Spiegel (3) dazu eingerichtet ist, den Nutzteil des Signalstrahls (20) von dem sekundären Spiegel (4) zu empfangen und an dem sekundären Spiegel (4) vorbei auf eine Sendestrecke zu reflektieren,
**gekennzeichnet durch**
mindestens ein Strahlausnahmeelement (5), das zwischen dem primären Spiegel (3) und dem Signalgeber (2) angeordnet ist und dazu eingerichtet ist, einen zentralen Teil des Signalstrahls (20) auszunehmen und somit einen Nichtnutzteil des Signalstrahls (20) zu reduzieren.

2. Vorrichtung (1) nach Anspruch 1, **gekennzeichnet durch** ein Linsensystem (6), das dazu eingerichtet ist, den Signalstrahl (20) zu formen, bevor dieser auf den sekundären Spiegel (4) fällt, wobei das Linsensystem (6) mindestens ein Strahlausnahmeelement (5) umfasst.

3. Vorrichtung (1) nach einem der Ansprüche 1 oder 2, **gekennzeichnet durch** einen Umlenkspiegel (7), der dazu eingerichtet ist, den Signalstrahl (20) umzulenken, bevor dieser auf den sekundären Spiegel (4) fällt, wobei der Umlenkspiegel (7) mindestens ein Strahlausnahmeelement (5) umfasst.

4. Vorrichtung (1) nach einem der vorherigen Ansprüche, **dadurch gekennzeichnet, dass** der sekundäre Spiegel (4) mindestens ein Strahlausnahmeelement (5) umfasst.

5. Vorrichtung (1) nach einem der vorherigen Ansprüchen, **dadurch gekennzeichnet, dass** das Strahlausnahmeelement (5) eine Schwärzung oder eine Mattierung ist.

6. Vorrichtung (1) nach einem der vorherigen Ansprüchen, **dadurch gekennzeichnet, dass** das Strahlausnahmeelement (5) eine Bohrung oder eine Senkung ist, wobei der Durchmesser der Bohrung oder Senkung bevorzugt zwischen 0,2 mm und 5 mm, besonders bevorzugt zwischen 0,5mm und 5mm liegt.

7. Vorrichtung (1) nach Anspruch 6, **dadurch gekennzeichnet, dass** die Bohrung oder die Senkung in dem sekundären Spiegel (4) und/oder in dem Umlenkspiegel (7) angeordnet ist.

8. Vorrichtung (1) nach einem der vorherigen Ansprüchen, **dadurch gekennzeichnet, dass** das Strahlausnahmeelement (5) eine Blende ist, wobei der Durchmesser bevorzugt zwischen 0,5 mm und 3 mm liegt.

9. Vorrichtung (1) nach einem der vorherigen Ansprüche, **dadurch gekennzeichnet, dass das** Strahlausnahmeelement (5) ein Strahlformungselement ist, insbesondere ein Axicon und/oder ein diffraktives optisches Element und/oder eine Freiformfläche ist.

10. Vorrichtung (1) nach einem der vorherigen Ansprüche, **dadurch gekennzeichnet, dass** das Strahlausnahmeelement (5) ein reflektives Element ist, insbesondere einen reflektiven Konus (50) umfasst und/oder eine reflektives Kugelsegment umfasst, so dass der Nichtnutzteil des Signalstrahls (20) aus dem Signalstrahl herausreflektiert wird.

11. Vorrichtung (1) nach Anspruch 10, **dadurch gekennzeichnet, dass** das reflektive Element auf dem sekundären Spiegel (4) und/oder auf dem Umlenkspiegel (7) angeordnet ist.

12. Vorrichtung (1) nach einem der vorherigen Ansprüche, **dadurch gekennzeichnet, dass** die Signalstärke des Nutzteils des Signalstrahls (2) durch das Strahlausnahmeelement (5) nicht reduziert wird.

13. Vorrichtung (1) nach einem der vorherigen Ansprüche, **dadurch gekennzeichnet, dass** der primäre Spiegel (3) und der sekundäre Spiegel (4) ein Cassegrain-Teleskop bilden.

14. Vorrichtung nach einem der vorherigen Ansprüche, **dadurch gekennzeichnet, dass** mindestens einer der Spiegel (3, 4, 7) ein Metallspiegel ist.
